# EUROPEAN PATENT SPECIFICATION

(11) **EP 2 975 946 B1**
(45) Date of publication and mention of the grant of the patent: **05.06.2019**
(21) Application number: 14768926.9
(22) Date of filing: 21.03.2014
(51) Int. Cl.: A23L 7/117, A23C 9/12, A23C 9/137, A23L 9/10, A23L 23/10

(54) **FOOD PRODUCTS CONTAINING POWDERED YOGURT, WHOLE GRAINS AND FRUITS**
LEBENSMITTELPRODUKTE MIT PULVERFÖRMIGEM JOGHURT, GANZEN KÖRNERN UND FRÜCHTEN
PRODUITS ALIMENTAIRES CONTENANT UN YAOURT EN POUDRE, DES GRAINS ENTIERS ET DES FRUITS

(30) Priority: 22.03.2013 US 201361804437 P
(43) Date of publication of application: 27.01.2016
(73) Proprietor: The Quaker Oats Company, Chicago, IL 60661 (US)
(72) Inventor: BAUER, Anna, Meta, Chicago, IL 60067 (US); SAMBOR, Brian, Vernon Hills, IL 60061 (US)
(74) Representative: Jenkins, Peter David
(86) International application number: PCT/US2014/031479
(87) International publication number: WO 2014/153524

(56) References cited:
- US-A- 3 080 236
- US-A- 3 985 901
- US-A- 4 624 853
- US-A- 4 956 185
- US-A- 5 145 697
- US-A1- 2007 104 854
- US-B1- 6 235 320
- Anonymous: "GNPD - Wild Berry Instant Porridge", , 1 September 2009 (2009-09-01), pages 1-2, XP055346313, Retrieved from the Internet: URL:http://www.gnpd.com/sinatra/recordpage /1177678/from_search/mSKT7W8HcY/?page=1 [retrieved on 2017-02-15]
- VERBEKEN D ET AL: "Interactions between kappa-carrageenan, milk proteins and modified starch in sterilized dairy desserts", INTERNATIONAL DAIRY JOURNAL, ELSEVIER APPLIED SCIENCE, BARKING, GB, vol. 16, no. 5, 1 May 2006 (2006-05-01), pages 482-488, XP024963236, ISSN: 0958-6946, DOI: 10.1016/J.IDAIRYJ.2005.06.006 [retrieved on 2006-05-01]
- DATABASE FSTA [Online] INTERNATIONAL FOOD INFORMATION SERVICE (IFIS), FRANkFURT-MAIN, DE; 1973, ANONYMOUS: "Functions like pre-gel, looks like cook-up.", XP002767333, Database accession no. FS-1974-04-G-0182

## Description

### BACKGROUND

### 1. Field

The present invention relates generally to a food product, and a method for preparing the food product, comprised of a dry mixture including (at least) yogurt powder, a stabilizer system, sweetener, and flavor, such that, when water, or hot or cold milk is added to the dry mixture and stirred, it develops a creamy texture in three (3) minutes or less.

### 2. Description of the Related Art

With today's fast paced society, and consumers on-the-go lifestyles, easy to consume, healthy products are important. However, such healthy, easy-to-consume healthy products are not as prevalent as the higher calorie, or empty calorie snacks typically available at grocery and convenience stores.

With regard to healthy food products, several food ingredients have been identified as important and several as necessary to maintain good health. And, while consumers place a high value on convenience, many are increasingly health conscious. For example, calcium is identified as a food ingredient that should be present in the daily diet in a particular proportion for maintaining a healthy bone structure. In addition, nutritionists often recommend consuming a particular number of servings of whole grains daily as part of a balanced diet.

### BRIEF SUMMARY

The following presents a simplified summary of aspects of the inventive products, formulations and methods disclosed here. This summary is not an extensive overview, and is not intended to identify all or only key or critical elements or to delineate the scope of the inventive products, formulations and methods covered by the claims. The following summary presents some concepts and aspects of the disclosure in a simplified form as a prelude to the more detailed description provided below of exemplary and non-limiting embodiments of the disclosure.

In accordance with one aspect of the instant disclosure a food product is provided, which comprises a dry mix that includes at least yogurt powder, a stabilizer system, and optionally fruit, whole grain, flavors, nuts, and a sweetener, such as sugar or another natural or artificial sweetener. Upon addition of chilled milk and stirring the chilled milk into the dry mix, the dry mix is hydrated, forming a food product with a creamy, firm texture, like yogurt. Of course, instead of chilled milk, hot milk, or water may be added to the dry mix, depending upon consumer preference.

In accordance with another aspect of the instant disclosure a food product is provided, which comprises a dry mix containing at least yogurt powder, a stabilizer system, fruit, oat-granola, flavors, and a sweetener, such as sugar or another natural or artificial sweetener. Upon addition of chilled milk and stirring the chilled milk into the dry mix, the dry mix is hydrated, forming a food product with a creamy, firm texture, like yogurt. Of course, instead of chilled milk, hot milk, or water may be added to the dry mix, depending upon consumer preference.

In a further aspect, there is provided a shelf-stable packaged dry mix product that contains a large amount of whole grains and the dairy-based calcium in a single-serve, easy to prepare and easy to consume package. In a single serving of 65g, a consumer can easily obtain at least about 20g equivalent of whole grains, about 6 to about 8g protein, and about 250mg calcium (if hydrated with milk). The packaged product provides a healthy product that is easy to prepare by hydrating with water and/or milk, easy to eat with a utensil like a spoon. The edible product can be prepared from the packaged dry product within about three minutes or less, and does not require a microwave or stove to prepare, albeit that the product can be heated by either, if so desired.

In accordance with another aspect of the disclosure a food-grade acid, such as citric acid, may be added to the dry mix, improving the texture of the food product upon hydration.

### DETAILED DESCRIPTION

The invention is defined by the claims. In the various exemplary embodiments, different formulas and methods are disclosed.

The term "spoonable" refers to a texture like that of yogurt that is edible with a spoon and not drinkable like a beverage.

The term "pre-mix" refers to dry components that are mixed together and form one part of a blend that makes up the dry mix. The "dry mix" includes the pre-mix and in addition, components that include but are not limited to, fruits, nuts, and granola. In some instances, a component of the pre-mix may subsequently be added when the dry mix is being blended thereby increasing the proportion of that component in the dry mix beyond what it would have been, based on its proportion in the pre-mix.

The inventors discovered that a spoonable food product can be produced in under 3 minutes by adding a hydrating liquid to a dry mix that includes a stabilizer comprised of certain modified starches with another stabilizer, and yogurt powder. Following the addition of liquid, the dry mix substantially hydrates in 3 minutes or less. The hydrated food product has the consistency of creamy yogurt and may be consumed with a spoon directly after hydration with no need to refrigerate or otherwise having to allow the product to stand for any length of time.

Unless otherwise stated, all proportions of the dry mix are in weight percent (wt. %) based on the mass of the dry mix.

In accordance with one aspect of the instant disclosure, though not according to the invention, a food product is provided, which comprises a dry mix that includes at least yogurt powder, a stabilizer system, and optionally fruit, whole grain, flavors, nuts, and a sweetener, such as sugar or another natural or artificial sweetener. Upon addition of chilled milk and stirring the chilled milk into the dry mix with a spoon, without need for other equipment or further preparation, the dry mix is hydrated, forming a food product with a creamy, firm texture, like yogurt. Of course, instead of chilled milk, hot milk, or water may be added to the dry mix, depending upon consumer preference. The yogurt may be dried product arrived at by freeze drying or spray drying, without limitation. Freeze dried yogurt may have advantages with regard to flavor. It may also have advantages with regard to delivering yogurt and/or probiotic cultures.

In an exemplary embodiment, though not according to the invention, there is provided a shelf-stable food product containing a dry mix. The dry mix includes at least a sweetener, such as sugar or honey, flavors, and yogurt powder. In one aspect of the invention, the sweetener, such as sugar, honey or an artificial or natural sweetener, may be present in an amount of about 10-20 wt. % of the dry mix, and more particularly in the range about 8-12 wt. %. In general, the amount of sweetener will also depend on the particular sweetener being added, and the perceived consumer preference. The flavors may be present in a concentration of about 0.75-1.5 wt. %. Such flavors may be natural and/or artificial. Examples of flavors include, but are not limited to: dairy, spice, fruit and nut flavors, including, but not limited to raspberry, blueberry, apple, banana, lemon, cinnamon, vanilla, walnut, almond, and pecan, and combinations of these flavors. The yogurt powder may be any type of yogurt powder, such as commercially available yogurt powder. An example, but not the only suitable yogurt powder, is Agropur Greek Yogurt Powder. Yogurt powder may be added in an amount of between about 10-20 wt. %, or more particularly, about 5-15 wt. %. The yogurt powder may be flavored (such as chocolate, vanilla, strawberry, etc.) or unflavored.

Further, the dry mix may also include a food-grade acid. The acid may include, without limitation citric acid, sorbic acid, malic acid, ascorbic acid, lactic acid and combinations of these acids. The acid may be present in a crystalline and/or anhydrous form. The food grade acid or acids may assist in reducing the pH of the resultant hydrated food product (made by hydrating the dry mix) to the range of about 4 to about 6, especially about 4 to about 5.

Exemplary embodiments of the dry mix may include fruits, including without limitation, dehydrated or freeze dried strawberries, raspberries, blackberries, blueberries, apples, bananas, cranberries and combinations of these fruits may be included in the dry mix. Moreover, nuts such as walnuts, peanuts, almonds, pecans, pistachios, macadamia nuts, hazelnuts, and other tree nuts may be used in the dry mix.

Exemplary embodiments of the dry mix may also include whole grains. The whole grains may be individual flakes, or whole grains, or clusters of whole grains, such as a grain-based granola. In one exemplary embodiment, the grain portion of the dry mix may include an oat-granola including about 18-28 wt. % whole grain oats along with 18-28 wt. % whole grain wheat, 3-8 wt. % rice crisps, 4-10 wt. % dairy powders, 5-10 wt. % starch, and 10-20 wt. % coating syrup. All of the amounts listed in this paragraph are per weight in the finished granola. The finished granola may be present in a range of about 45 to about 65 wt. %, and more particularly such as about 50-60 wt. % of the dry mix.

The dry mix comprises a stabilizer system which includes at least one modified starch and at least a carrageenan. The at least one modified starch is selected from the group consisting of modified corn starch derived from dent corn, cross-linked modified starch and combinations thereof. Useful starches are modified starches such as AGW-4, Mira-Thik 470®.

The modified starch is present in the dry mix in a concentration of 3-9 wt. %, and more particularly about 6-7 wt. %. The carrageenan is present in a range of 1 to 5 % wt., especially about 2 to about 4 wt. %.

In an exemplary embodiment, the stabilizer system includes the modified starch in an amount from about 6-7 wt. % and about 2-4 wt. % carrageenan. In one exemplary embodiment, the stabilizer system includes modified starch AGW-4 in a concentration of about 6.3 wt. %, and a carrageenan present in an amount of about 3.0 wt. % .

In an exemplary embodiment, when a hydrating liquid, including without limitation, water, fruit or vegetable juice, or milk is added to the dry mixture and stirred (or otherwise agitated) it creates a creamy, thick yogurt based food product. In one aspect, cold milk is used as the liquid. "Cold milk" or "chilled milk," as used in herein means any type of liquid milk, including skim milk, soy milk, almond milk, rice milk, condensed milk, reconstituted powdered milk, at a temperature of about 0-35°C, such as about 4-6°C.

In exemplary embodiments of the dry mix powder hydrates quickly due to the components included in the dry mixture. In particular, while not being bound by any theory, the presence of the at least one modified starch in addition to carrageenan provide a stabilizer system that results in a creamy, non-pasty texture. Further, the sweeteners, flavors, and food-grade acid contribute to the creamy product texture. Specifically, the dry mix powder hydrates quickly and becomes an "instant" yogurt. In exemplary embodiments the dry mix is substantially hydrated within less than 3 minutes after adding the cold milk to the dry ingredients, yielding a creamy textured ready-to-eat spoonable product. For instance, in exemplary embodiments, the yogurt powder may hydrate in 2.5 minutes or less, or in 2 minutes or less. Thus, unlike an instant pudding or commercially available powdered yogurt, there is no need for the product to stand in a refrigerator for a period of time in order to hydrate due to the unique stabilizer system and blend of ingredients.

The inventors unexpectedly found that the stabilizer system included in the dry mix created a product having a smooth texture and fast hydration times. Many of the combinations of starches and hydrocolloids originally tested resulted in food products having unacceptable taste and appearance. For instance, some combinations provided a smooth texture, but the hydration time was over 3 minutes, or the combinations hydrated quickly but resulted in a pasty texture. When guar gum was used by itself, for example, the product acquired an unacceptable stringy and opaque gel-like appearance.

In aspects of the present disclosure, the food product is less than 350 calories per 65g dry mix (which is a single serving), less than 10 grams of fat, and between about 15-25 grams of and a sweetener, such as sugar or another natural or artificial sweetener. The selective use of artificial low calorie sweetener may reduce the caloric load per serving. Further, in exemplary embodiments, the grains added are whole grains.

### EXAMPLES

**Example 1:** In one aspect of the present disclosure a strawberry food product was prepared. The following components were included in the dry pre-mix

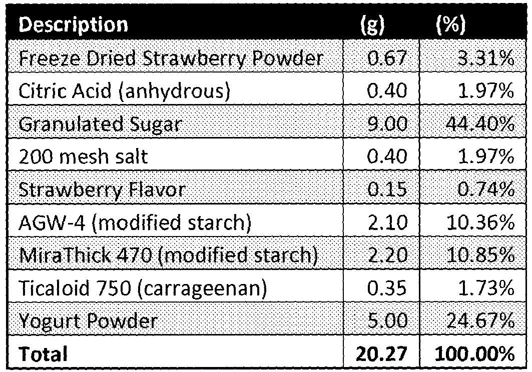

The dry mix was assembled in the following manner:

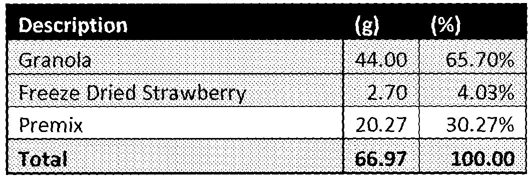

The final formula for the dry mixture included the following components and their relative concentrations:

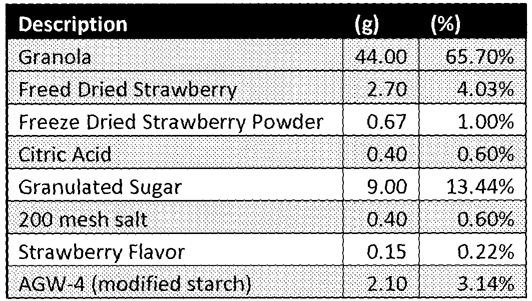

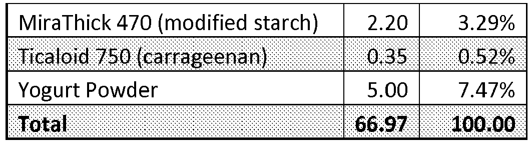

The final formula above is not according to the invention.

About 123 grams of cold milk were added to the dry mix. The mixture was stirred vigorously until the yogurt powder was dissolved. The resulting yogurt-based food product was left to rest at room temperature for about 2-3 minutes to allow for the starches to substantially hydrate. The inventors found that the product contained the best textural attributes if consumed within 10 minutes of preparation. In particular, the product had a creamy and firm consistency like yogurt.

**Example** 2: In one aspect of the present disclosure an apple cinnamon food product was prepared. The following components were included in the dry pre-mix

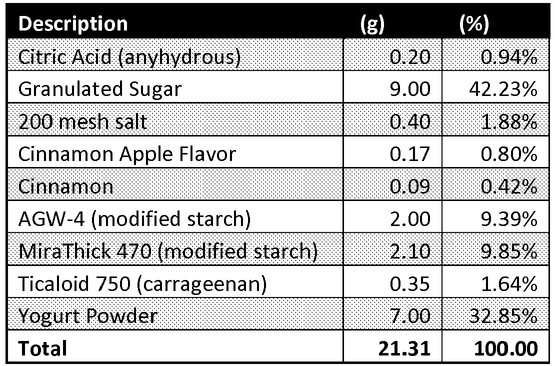

The dry mix was assembled in the following manner:

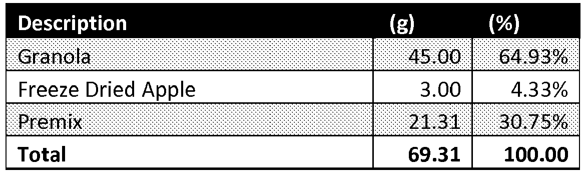

The final formula for the dry mixture included the following components and their relative concentrations:

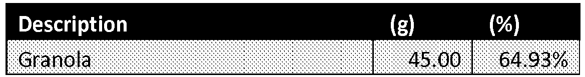

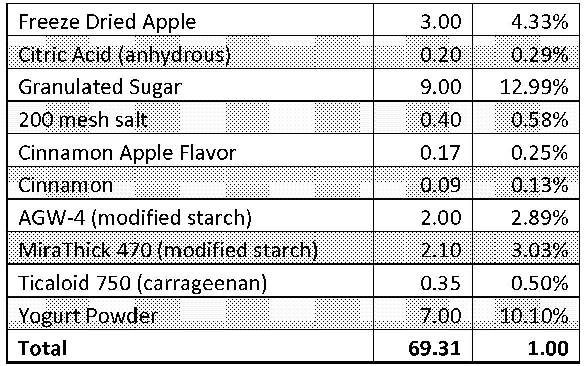

The final formula above is not according to the invention.

About 130 grams of cold milk were added to the dry mix. The mixture was stirred vigorously until the yogurt powder was dissolved. The product was left to rest at room temperature for about 2-3 minutes to allow for the starches to substantially hydrate. The inventors found that the resulting yogurt-based product contained the best textural attributes if consumed within 10 minutes of preparation. In particular, the product had a creamy consistency like yogurt.

**Example 3:** In one aspect of the present disclosure a raspberry food product was prepared. The following components were included in the dry pre-mix

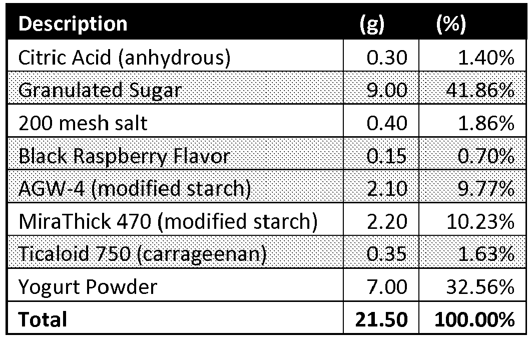

The dry mix was assembled in the following manner:

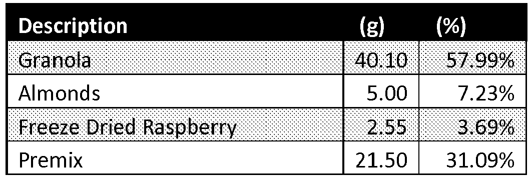

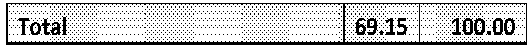

The final formula for the dry mixture included the following components and concentrations:

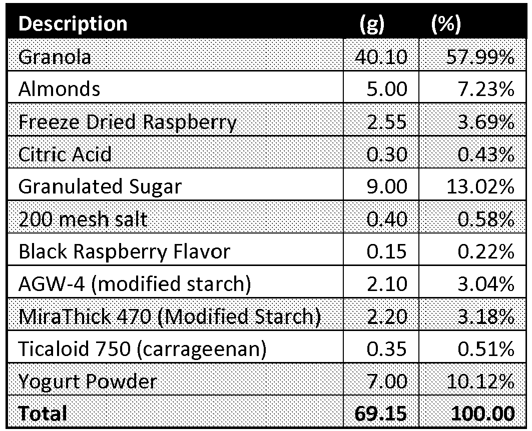

The final formula above is not according to the invention.

About 125 grams of cold milk were added to the dry mix. The mixture was stirred vigorously until the yogurt powder was dissolved. The product was left to rest at room temperature for about 2-3 minutes to allow for the starches to substantially hydrate. The inventors found that the resulting yogurt-based product contained the best textural attributes if consumed within 10 minutes of preparation. In particular, the product had a creamy consistency like yogurt.

**Example 4:** In one aspect of the present disclosure a blueberry food product was prepared. The following components were included in the dry pre-mix:

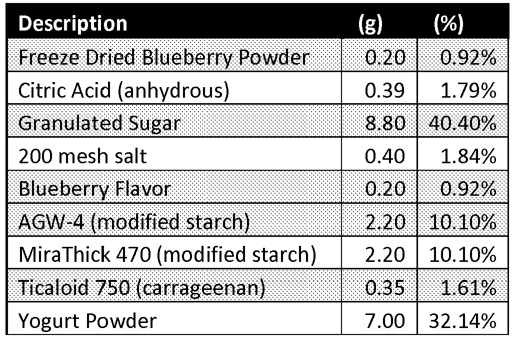

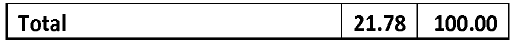

The dry mix was assembled in the following manner:

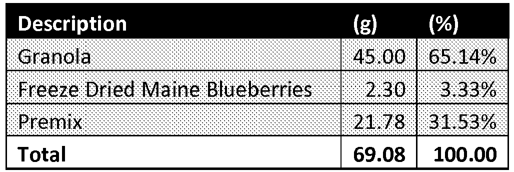

The final formula for the dry mixture included the following components and concentrations:

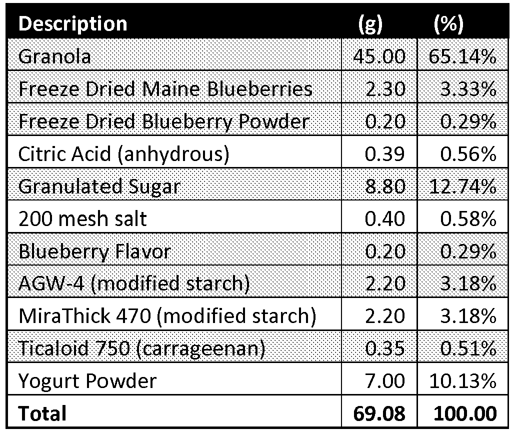

The final formula above is not according to the invention.

About 125 grams of cold milk were added to the dry mix. The mixture was stirred vigorously until the yogurt powder was dissolved. The product was left to rest at room temperature for about 2-3 minutes to allow for the starches to substantially hydrate. The inventors found that the resulting yogurt-based product contained the best textural attributes if consumed within 10 minutes of preparation. In particular, the product had a creamy consistency like yogurt.

**Example 5:** In one aspect of the present disclosure a banana walnut food product was prepared. The following components were included in the dry pre-mix:

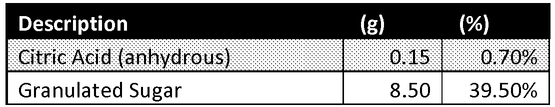

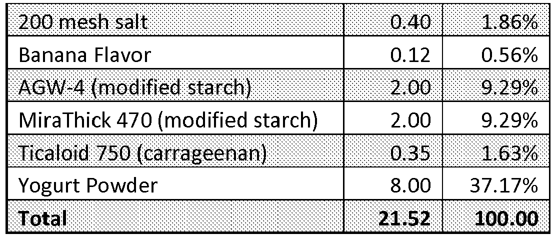

The dry mix was assembled in the following manner:

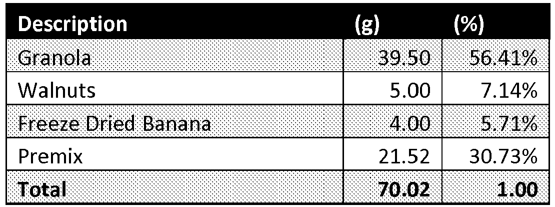

Figure 1 illustrates the banana walnut dry mix.

The final formula for the dry mixture included the following components and concentrations:

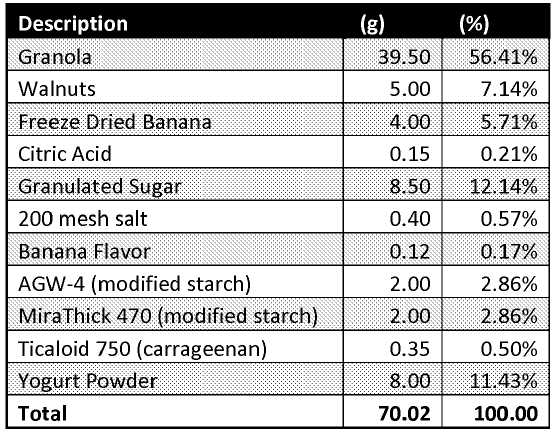

The final formula above is not according to the invention.

About 130 grams of cold milk were added to the dry mix. The mixture was stirred vigorously until the yogurt powder was dissolved. The product was left to rest at room temperature for about 2-3 minutes to allow for the starches to substantially hydrate. The inventors found that the resulting yogurt-based product contained the best textural attributes if consumed within 10 minutes of preparation. In particular, the product had a thick and creamy consistency like yogurt. The hydrated banana food product is shown in Figure 2

**Example 6:** In one aspect of the present disclosure a raspberry product was prepared. The following components were included in the dry pre-mix:

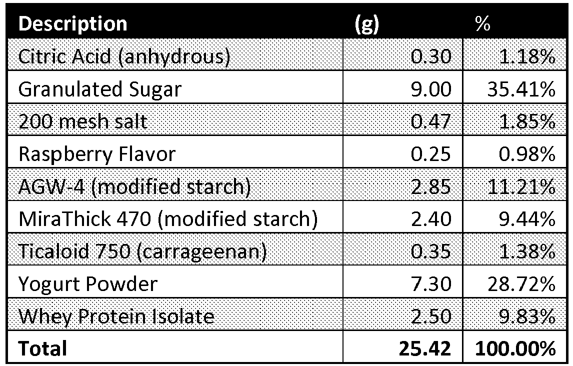

The dry mix was assembled in the following manner:

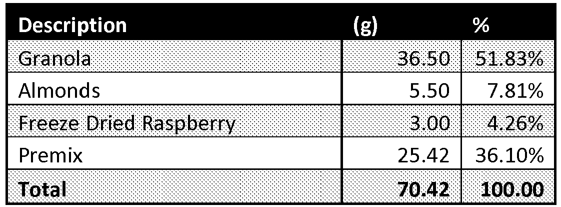

The final formula for the dry mixture included the following components and concentrations:

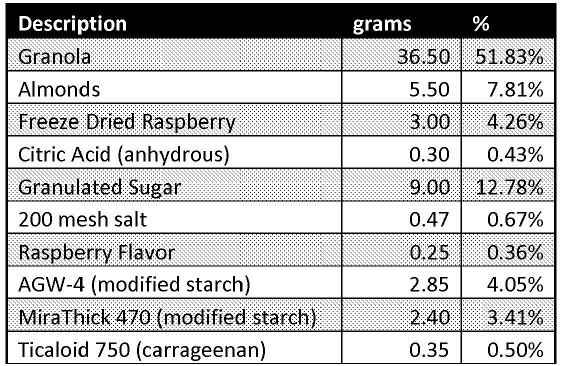

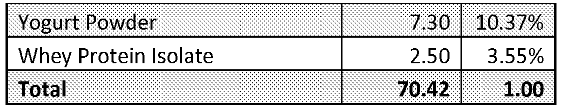

The final formula above is not according to the invention.

About 115 grams of cold milk were added to the dry mix. The mixture was stirred vigorously until the yogurt powder was dissolved. The product was left to rest at room temperature for about 2-3 minutes to allow for the starches to substantially hydrate. The inventors found that the resulting yogurt-based product contained the best textural attributes if consumed within 10 minutes of preparation.

### Example 7

| **Details** | **Strawberry** | **Raspberry** | **Apple** | **Ideal Range** | **Broad Range** |
|---|---|---|---|---|---|
| Granola | 57% | 56% | 59% | 55-60% | 50-75% |
| Dried Fruit | 4% | 4% | 6% | 4-6% | 0-15% |
| Nut | 5% | 7% | 0% | 0-8% | 0-15% |
| Sugar | 10% | 10% | 11% | 8-12% | 5-20% |
| Tate & Lyle AGW-4 Modified Corn Starch | 6% | 6% | 7% | 5-7% | 3-9% |
| CP Kelco GenuGel CJ Carrageenan | 3% | 3% | 3% | 2-4% | 1-5% |
| Agropur Greek Yogurt Powder | 12% | 11% | 12% | 10-12% | 5-20% |
| Citric Acid | 0.3% | 0.3% | 0.3% | 0.2-0.4% | 0-1% |
| Vegetable Juice (for color) | 0.1% | 0.1% | 0.0% | 0-0.2% | 0-1% |
| Flavor | 1.7% | 1.8% | 1.9% | 1.5-2.0% | 0-4% |
| Spice | 0.0% | 0.0% | 0.2% | 0-0.2% | 0-1% |

**Premix**

| **Details** | **Strawberry** | **Raspberry** | **Apple** | **Range** |
|---|---|---|---|---|
| Sugar | 31. % | 31 % | 31 % | 30-32 % |
| Tate & Lyle AGW-4 Modified Corn Starch | 19 % | 19 % | 19 % | 18-20 % |
| CP Kelco GenuGel CJ Carrageenan | 9 % | 9 % | 9 % | 8-10 % |
| Agropur Greek Yogurt Powder | 35 % | 34 % | 34 % | 33-35 % |
| Flavor | 5 % | 6 % | 5 % | 4-6 % |
| Citric Acid | 0.9 % | 0.9 % | 0.9 % | 0.8-1.2% |
| Vegetable Juice (for color) | 0.2% | 0.4 % | 0.00 % | 0-0.5 % |
| Spice | 0.00% | 0.00% | 0.5 % | 0-0.5 % |
| **Total** | **100.00%** | **100.00%** | **100.00%** | |

**Assembly**

| **Details** | **Strawberry** | **Raspberry** | **Apple** | **Range** |
|---|---|---|---|---|
| Premix | 33 % | 33 % | 35 % | 32-35 % |
| Granola | 57 % | 56 % | 59 % | 55-60% |
| Fruit | 4 % | 4 % | 6 % | 4-6% |
| Nut | 5 % | 7 % | 0.0% | 0-8% |
| **Total** | **100.00%** | **100.00%** | **100.00%** | |

The pre-mix components were mixed together, and after mixing, the assembly components were added. This makes up the dry mixes, as tabulated above. For each dry mix, 65 g sample of the dry mix was selected and about ½ cup, or about 120 grams, of cold milk was added to the dry mix sample. The mixture was stirred vigorously until all the visible yogurt powder was dissolved. The product was left to rest at room temperature for about 2-3 minutes to allow for the product to substantially hydrate. It was found that the resulting spoonable creamy yogurt-based product contained the best textural attributes if consumed within 10 minutes of preparation.

Exemplary embodiments of the dry mix food products have a minimum shelf life of about 6-9 months when stored at ambient conditions of temperature and humidity, as may be encountered in supermarkets and homes in the US.

Exemplary embodiments of the dry mix food products provide the consumer with a nutritious food product that is easy to hydrate and then consume on-the-go. Unlike ready-to-eat products that must remain refrigerated and have a relatively short shelf life, the exemplary food products are portable, relatively non-perishable with an extended shelf-life, and very quick to prepare (3 minutes or less).

## Claims

1. A shelf-stable dry food product comprising:
yogurt powder;
a stabilizer system, the stabilizer system including a modified starch and a_carrageenan; and
a sweetener;
wherein, when an aqueous liquid is added to the dry food product, the stabilizer system is selected such that the dry food product hydrates within less than three minutes to form a product having the consistency of yogurt, and
wherein the modified starch is present in an amount of 3% to 9% by weight of the dry food product,
wherein the carrageenan is present in an amount of 1% to 5% by weight of the dry food product,
and wherein the modified starch is selected from the group consisting of modified corn starch derived from dent corn, cross-linked modified starch and combinations thereof.

2. The food product of claim 1, further comprising a food-grade acid, preferably wherein the food-grade acid is citric acid.

3. The food product of claim 1, wherein the sweetener comprises sugar.

4. The food product of claim 1, further comprising whole grain, or
further comprising fruit, or
further comprising fruit and whole grain, or
further comprising granola and fruit, or
further comprising fruit, whole grain and nuts.

5. The food product according to claim 1, wherein the food product further comprises whole grains.

6. The food product of claim 5, wherein the dry mixture further includes citric acid.

7. The food product of claim 5, wherein the dry mixture further includes dried fruit, optionally wherein the dried fruit is selected from the group consisting of strawberries, raspberries, blueberries, bananas, and combinations thereof, or
wherein the dry mixture further includes nuts.

8. A method of preparing a spoonable food, with a thick, creamy texture, the spoonable food having a caloric content less than 350 calories per serving, comprising:
adding an aqueous liquid to hydrate components of a dry mix, the dry mix comprising:
a stabilizer including a modified starch and a carrageenan;
yogurt powder; and
whole grains;
wherein the dry mix is provided in an edible packaged food product,
wherein the modified starch is present in an amount of 3% to 9% of the dry mix, wherein the carrageenan is present in an amount of 1% to 5% by weight of the dry mix,
and wherein the modified starch is selected from the group consisting of modified corn starch derived from dent corn, cross-linked modified starch and combinations thereof.

9. The method of claim 8, wherein the dry mixture comprises less than 10 g. of fat per serving when the dry mix is hydrated with water.

10. The method of claim 8, wherein the whole grain comprises oats.

11. The method of claim 8, wherein the dry mixture further comprises dried fruit.

## Patentansprüche

1. Haltbares trockenes Lebensmittelprodukt, das Folgendes umfasst:
Joghurtpulver;
ein Stabilisatorsystem, wobei das Stabilisatorsystem eine modifizierte Stärke und ein Carrageen beinhaltet; und
einen Süßstoff;
wobei, wenn dem trockenen Lebensmittelprodukt eine wässrige Flüssigkeit zugegeben wird, das Stabilisatorsystem so gewählt wird, dass das trockene Lebensmittelprodukt innerhalb von weniger als drei Minuten hydratisiert, um ein Produkt mit der Konsistenz von Joghurt zu bilden, und
wobei die modifizierte Stärke in einer Menge von 3 bis 9 Gew.-% des trockenen Lebensmittelprodukts vorliegt,
wobei das Carrageen in einer Menge von 1 bis 5 Gew.-% des trockenen Lebensmittelprodukts vorliegt,
und wobei die modifizierte Stärke ausgewählt ist aus der Gruppe bestehend aus modifizierter Maisstärke, abgeleitet von Zahnmais, vernetzter modifizierter Stärke und Kombinationen davon.

2. Lebensmittelprodukt nach Anspruch 1, das ferner Säure von Lebensmittelqualität umfasst, wobei die Säure von Lebensmittelqualität Zitronensäure ist.

3. Lebensmittelprodukt nach Anspruch 1, wobei der Süßstoff Zucker umfasst.

4. Lebensmittelprodukt nach Anspruch 1, das ferner Vollkorn umfasst, oder
ferner Früchte umfasst, oder
ferner Früchte und Vollkorn umfasst, oder
ferner Granola und Früchte umfasst, oder
ferner Früchte, Vollkorn und Nüsse umfasst.

5. Lebensmittelprodukt nach Anspruch 1, wobei das Lebensmittelprodukt ferner Vollkörner umfasst.

6. Lebensmittelprodukt nach Anspruch 5, wobei das Trockengemisch ferner Zitronensäure beinhaltet.

7. Lebensmittelprodukt nach Anspruch 5, wobei das Trockengemisch ferner Trockenfrüchte beinhaltet, wobei die Trockenfrüchte optional ausgewählt sind aus der Gruppe bestehend aus Erdbeeren, Himbeeren, Blaubeeren, Bananen und Kombinationen davon, oder
wobei das Trockengemisch ferner Nüsse beinhaltet.

8. Verfahren zur Herstellung eines löffelbaren Lebensmittelprodukts mit einer dicken, cremigen Textur, wobei das löffelbare Lebensmittel einen Kaloriengehalt von weniger als 350 Kalorien pro Portion beinhaltet, das Folgendes beinhaltet:
Zugeben einer wässrigen Flüssigkeit zum Hydratisieren von Komponenten eines Trockengemischs, wobei das Trockengemisch Folgendes umfasst:
einen Stabilisator mit einer modifizierten Stärke und einem Carrageen;
Joghurtpulver; und
Vollkörner;
wobei das Trockengemisch in einem essbaren verpackten Lebensmittelprodukt bereitgestellt wird,
wobei die modifizierte Stärke in einer Menge von 3 % bis 9 % des Trockengemischs vorliegt, wobei das Carrageen in einer Menge von 1 bis 5 Gew.-% des Trockengemischs vorliegt,
und wobei die modifizierte Stärke ausgewählt wird aus der Gruppe bestehend aus modifizierter Maisstärke, abgeleitet von Zahnmais, vernetzter modifizierter Stärke und Kombinationen davon.

9. Verfahren nach Anspruch 8, wobei das Trockengemisch weniger als 10 g Fett pro Portion umfasst, wobei das Trockengemisch mit Wasser hydratisiert wird.

10. Verfahren nach Anspruch 8, wobei das Vollkorn Hafer umfasst.

11. Verfahren nach Anspruch 8, wobei das Trockengemisch ferner Trockenfrüchte umfasst.

## Revendications

1. Produit alimentaire sec de longue conservation, comprenant :
du yaourt en poudre ;
un système de stabilisation, le système de stabilisation comportant un amidon modifié et un carraghénine ;
et
un édulcorant ;
dans lequel, lorsqu'un liquide aqueux est ajouté au produit alimentaire sec, le système de stabilisation est sélectionné de sorte que le produit alimentaire sec s'hydrate en moins de trois minutes, pour former un produit ayant la consistance de yaourt, et
dans lequel l'amidon modifié est présent dans un volume de 3 % à 9 % en poids du produit alimentaire sec,
dans lequel le carraghénine est présent dans un volume de 1 % à 5 % en poids du produit alimentaire sec,
et dans lequel l'amidon modifié est sélectionné dans le groupe consistant en amidon de maïs modifié dérivé de maïs denté, en amidon modifié non réticulé et en une combinaison de ceux-ci.

2. Produit alimentaire selon la revendication 1, comprenant en outre un acide de qualité alimentaire, de préférence dans lequel l'acide de qualité alimentaire est de l'acide citrique.

3. Produit alimentaire selon la revendication 1, dans lequel l'édulcorant comprend du sucre.

4. Produit alimentaire selon la revendication 1, comprenant en outre des grains entiers, ou
comprenant en, outre des fruits, ou
comprenant en outre des fruits et des grains entiers, ou
comprenant en outre du granola et des fruits, ou
comprenant en outre des fruits, des grains entiers et des noix.

5. Produit alimentaire selon la revendication 1, dans lequel le produit alimentaire comprend en outre des grains entiers.

6. Produit alimentaire selon la revendication 5, dans lequel le mélange sec inclut en outre de l'acide citrique.

7. Produit alimentaire selon la revendication 5, dans lequel le mélange sec inclut en outre des fruits secs, éventuellement dans lequel les fruits secs sont sélectionnés dans le groupe consistant en fraises, framboises, myrtilles, bananes et en combinaison de celles-ci, ou
dans lequel le mélange sec inclut en outre des noix.

8. Procédé pour préparer des aliments mangeables à la cuillère ayant une texture épaisse et crémeuse, les aliments mangeables à la cuillère ayant un contenu calorifique inférieur à 350 calories par portion, comprenant :
l'ajout d'un liquide aqueux pour hydrater les composants d'un mélange sec, le mélange sec comprenant :
un stabilisateur incluant un amidon modifié et un carraghénine ;
du yaourt en poudre , et
des grains entiers ;
dans lequel le mélange sec est présenté sous forme d'un produit alimentaire emballé comestible,
dans lequel l'amidon modifié est présent dans un montant de 3 % à 9 % en poids du mélange sec, dans lequel le carraghénine est présent dans un montant de 1 % à 5 % en poids du mélange sec,
et dans lequel l'amidon modifié est sélectionné dans le groupe consistant en amidon de maïs modifié dérivé de maïs denté, en amidon modifié non réticulé et en une combinaison de ceux-ci.

9. Procédé selon la revendication 8, dans lequel le mélange sec comprend moins de 10 g de matière grasse par portion lorsque le mélange sec est hydratée avec de l'eau.

10. Procédé selon la revendication 8, dans lequel les grains entiers comprennent de l'avoine.

11. Procédé selon la revendication 8, dans lequel le mélange sec comprend en outre des fruits secs.
